# EUROPEAN PATENT APPLICATION

(11) **EP 2 579 626 A1**
(43) Date of publication of application: **10.04.2013**
(21) Application number: 10850921.7
(22) Date of filing: 10.11.2010
(51) Int. Cl.: H04W 4/12

(54) **USER INFORMATION PUSHING METHOD, PRESENTING METHOD, SYSTEM, SERVER AND CLIENT THEREOF**

(30) Priority: 07.06.2010 CN 201010195933
(71) Applicant: Guangzhou Sunrise Electronics Development Co., Ltd, Guangzhou, Guangdong 510300 (CN)
(72) Inventor: HU, Zhiwei, Guangzhou, Guangdong 510300 (CN); LIU, Lixia, Guangzhou, Guangdong 510300 (CN); CHEN, Zhang, Guangzhou, Guangdong 510300 (CN); XIAO, Jianjun, Guangzhou Guangdong 510300 (CN); YUAN, Xiaopeng, Guangzhou, Guangdong 510300 (CN); YE, Kunhua, Guangzhou, Guangdong 510300 (CN)
(74) Representative: Kraenzmer, Martin
(86) International application number: PCT/CN2010/078594
(87) International publication number: WO 2011/153790

(57) **Abstract**

The invention discloses a user information pushing method, a user information representation method, a system, a server and a client. The pushing method includes: arranging a plurality of service interfaces to be invoked by the client, wherein the service interfaces comprise a real-time information pushing interface; receiving, by a server, through the real-time information pushing interface, a real-time information acquisition instruction sent by the client, when the client uses a target service and automatically invokes the real-time information pushing interface; acquiring real-time information of the target service according to a subscriber number contained in the real-time information acquisition instruction; and pushing the real-time information to the client. In the embodiments of the present invention, by means of the client, user may obtain in real time the user information pushed by the server and present the user information by means of the preset presentation interface while using a target service. Compared with the prior art, the user does not need to conduct manual query operations after finishing the target service, therefore the implementation performance for the client to output user information and user experience are improved.

## Description

This application claims the priority to Chinese Patent Application No.201010195933.2, entitled "USER INFORMATION PUSHING METHOD, USER INFORMATION PRESENTATION METHOD, SYSTEM, SERVER AND CLIENT", filed on June 7, 2010 with State Intellectual Property Office of PRC, the content of which is hereby incorporated by reference in its entirety.

### FIELD OF THE INVENTION

The application relates to the field of communication technology, and particularly to a user information pushing method, a user information presentation method, a system, a server and a client.

### BACKGROUND OF THE INVENTION

When a user utilizes a mobile terminal to implement communication and customized services, operators will charge the user. With emergence of new services as well as issue of various charging types and service packages, and especially with the development of 3G communication, it is difficult for the user to know the billing of the mobile terminal in real time during the use of the mobile terminal. Taking a usual account balance query as an example, when a general mobile phone user needs to query the balance, the user may dial a number specially preset by the operator to make a voice query, or may make a query by sending a query short message to the number specially preset by the operator and receiving a reply short message.

When researching the prior art, the inventors found that although the user has needs of obtaining various user information (such as current balance, customized service information) in real time during the use of the mobile terminal, the query by means of short message or the voice query involves a complex operating process and has a low real-time performance, which reduces user experience; furthermore, since there are a great variety of user information, and the presentation of the query information at the mobile terminal end is limited in forms, it is difficult to achieve a comprehensive query on various user information, which decreases the performance of mobile terminal.

### SUMMARY OF THE INVENTION

An objective of an embodiment of the present invention is to provide a user information pushing method, a user information presentation method, a system, a server and a client, so as to solve the problem in the prior art that it is difficult for a user to acquire user information through a terminal in real time.

To solve the above problem, embodiments of the present invention provide technical solutions as follows.

A user information pushing method, in which a plurality of service interfaces to be invoked by a client are arranged, and the service interfaces include a real-time information pushing interface, the method including:

receiving, by a server, through the real-time information pushing interface, a real-time information acquisition instruction sent from a client, when the client uses a target service and automatically invokes the real-time information pushing interface;

acquiring real-time information of the target service according to a user number contained in the real-time information acquisition instruction; and

pushing the real-time information to the client.

A user information presentation method, for presenting the information pushed by means of the above user information pushing method, the user information presentation method including:

automatically invoking, by the client, the real-time information pushing interface, when the client uses the target service;

sending, by the client, the real-time information acquisition instruction, to the server through the real-time information pushing interface;

receiving the real-time information of the target service pushed by the server, in which the real-time information of the target service is acquired according to the user number contained in the real-time information acquisition instruction; and

presenting the real-time information of the target service by means of a preset presentation interface.

A user information presentation system, including a server and a client, in which:

the server is adapted to arrange a plurality of service interfaces to be invoked by a client, the service interfaces including a real-time information pushing interface, and when the client uses a target service and automatically invokes the real-time information pushing interface, the server receives through the real-time information pushing interface a real-time information acquisition instruction sent from the client, acquires real-time information of the target service according to a user number contained in the real-time information acquisition instruction, and pushes the real-time information to the client; and

the client is adapted to present the real-time information of the target service by means of a preset presentation interface.

A server, including:

an arrangement unit, adapted to arrange a plurality of service interfaces to be invoked by a client, in which the service interfaces include a real-time information pushing interface;

a receiving unit, adapted to receive a real-time information acquisition instruction sent from a client through the real-time information pushing interface, when the client uses a target service and automatically invokes the real-time information pushing interface;

an acquisition unit, adapted to acquire real-time information of the target service according to a user number contained in the real-time information acquisition instruction; and

a pushing unit, adapted to push the real-time information to the client.

A client for presenting the information pushed by the above server, including:

an invoking unit, adapted to automatically invoke the real-time information pushing interface when the client uses the target service;

a sending unit, adapted to send the real-time information acquisition instruction to the server through the real-time information pushing interface;

a receiving unit, adapted to receive the real-time information of the target service pushed by the server which is acquired according to the user number contained in the real-time information acquisition instruction; and

a presentation unit, adapted to present the real-time information of the target service through a preset presentation interface.

Thus, in the embodiments of the present invention, the server is arranged with a plurality of service interfaces to be invoked by a client, and when the client uses a target service and automatically invokes the real-time information pushing interface, the server receives through the real-time information pushing interface a real-time information acquisition instruction sent from the client, acquires real-time information of the target service according to a user number contained in the real-time information acquisition instruction, and pushes the real-time information to the client, and the client presents the real-time information of the target service by means of a preset presentation interface. In the embodiments of the present invention, by means of the client, user may obtain in real time the user information pushed by the server and present the user information by means of the preset presentation interface while using a target service. Compared with the prior art, the user does not need to conduct manual query operations after finishing the target service, therefore the implementation performance for the client to output user information and user experience are improved.

### BRIEF DESCRIPTION OF THE DRAWINGS

Technical solutions of the embodiments of the present applicant and/or the prior art will be illustrated more clearly with the following brief description of the drawings. Apparently, the drawings referred in the following description constitute only some embodiments of the invention. Those skilled in the art may obtain some other drawings from these drawings without any inventive labor.

Figure 1 is a flow chart of a first embodiment of a user information pushing method according to the present invention;

Figure 2 is a flow chart of a second embodiment of a user information pushing method according to the present invention;

Figure 3 is a flow chart of a first embodiment of a user information presentation method according to the present invention;

Figure 4 is a flow chart of a second embodiment of a user information presentation method according to the present invention;

Figure 5A is a schematic diagram of a convergent charging architecture in which embodiments of the user information pushing method and the user information presentation method according to the present invention are utilized;

Figure 5B is a schematic structural diagram of the implementation of the convergent charging system in Figure 5A;

Figure 6 is an example block diagram of a user information presentation system according to the present invention;

Figure 7 is an example block diagram of a server according to the present invention; and

Figure 8 is an example block diagram of a client according to the present invention.

### DETAILED DESCRIPTION OF THE INVENTION

The embodiments of the present invention provide a user information pushing method, a user information presentation method, a system, a server and a client.

The technical solutions of the embodiments according to the present application will be described in more details with reference to the attached drawings, to make the solutions better understood by those skilled in the art and to make the above objectives, features, and advantages of the embodiment clearer.

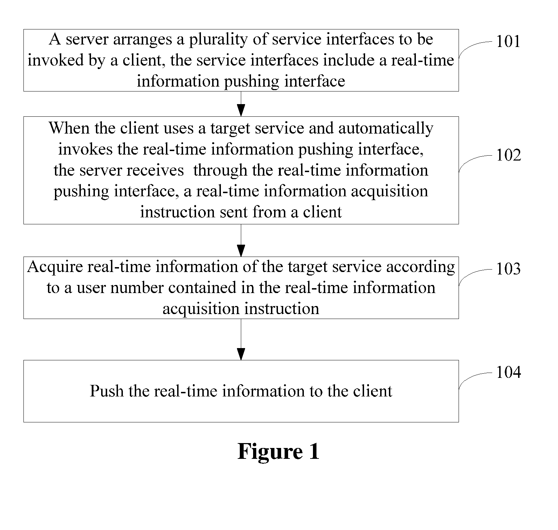

Referring to Figure 1, which is a flow chart of a first embodiment of a user information pushing method according to the present invention, a process that a server pushes user information to a client in real time when the client uses a service is shown. The process includes:

Step 101, arranging, in a server, a plurality of service interfaces to be invoked by a client, in which the service interfaces include a real-time information pushing interface.

Usually, a mobile terminal used by a user is installed with a client for implementing communication between the mobile terminal and the server. When the user uses the client in the mobile terminal to acquire user information in real time, firstly a mobile phone number and a password are required for logging-on, so as to establish a connection with the server.

In the embodiment of the present invention, the real-time information pushing interface is adapted to perform instant communication with the server when the user are using a service, and to obtain information related to the current service, so that the user can view the information in real time on the presentation interface of the mobile terminal.

The real-time information pushing interface may includes: a network element real-time access message interface, for acquiring user service information including service status information, service charging information, information on charging network element and session identification information in real time; a charging reservation real-time message interface, for acquiring charging reservation information in real time; and an account changing real-time message interface, for acquiring information on the change of user service balance in real time.

Step 102, receiving, by a server, a real-time information acquisition instruction sent from a client through a real-time information pushing interface, when the client uses a target service and automatically invokes a real-time information pushing interface.

The target service used by the client may be: voice service, short message service, on-line service, and the like. Once the user starts to use a service of a certain kind, the client in the mobile terminal will invoke the network element real-time access message interface to obtain service status information, service charging information, information on charging network element and session identification information pushed by the server. Since the service is likely to continue for a period of time, for example, the voice conversation is likely to continue for several minutes, and some information of the service is likely to change with time, the client may be preset to invoke the network element real-time access message interface every 2 to 3 seconds; after the session identification information of the current service is obtained by invoking the network real-time access information interface, the charging reservation information pushed by the server in real time can be obtained by invoking the charging reservation real-time message interface according to the session identification information; and when the service is ended, accordingly the charging of the service is completed, and at this time, the account changing real-time message interface is invoked for acquiring the information on the change of the user service balance, so that the user can view the service balance information before and after the end of the service in real time.

Step 103, acquiring real-time information of the target service according to a user number contained in the real-time information acquisition instruction.

Step 104, pushing the real-time information to the client, and ending the current process.

In the above embodiment, if the real-time information pushing interface is a network element real-time access message interface, the server receives through the network element real-time access information interface a user service information acquisition instruction sent from the client, captures service messages of the target service from a shared memory according to the user number contained in the user service information acquisition instruction so as to acquire the user service information including service status information, service charging information, information on charging network element and session identification information from the service messages, and pushes the user service information to the client through a network service interface.

Furthermore, if the real-time information pushing interface is a charging reservation real-time message interface, the server receives through the charging reservation real-time message interface a user charging reservation information acquisition instruction sent from the client, acquires charging reservation information of the target service from a database in the memory through a balance management center, according to session identification information contained in the user charging reservation information acquisition instruction, and pushes the charging reservation information to the client through a network service interface.

If the real-time information pushing interface is an account changing real-time message interface, when the client ends the use of the target service, the serve receives through the account changing real-time message interface a user service balance changing information acquisition instruction, acquires information on change of user service balance corresponding to a user number contained in the user service balance changing information acquisition instruction from a database in the memory through a balance management center according to the user number, and pushes the information on change of user service balance to the client through a network service interface, in which the information on change of user service balance includes service balance information before the using of the target service and service balance information after the using of the target service.

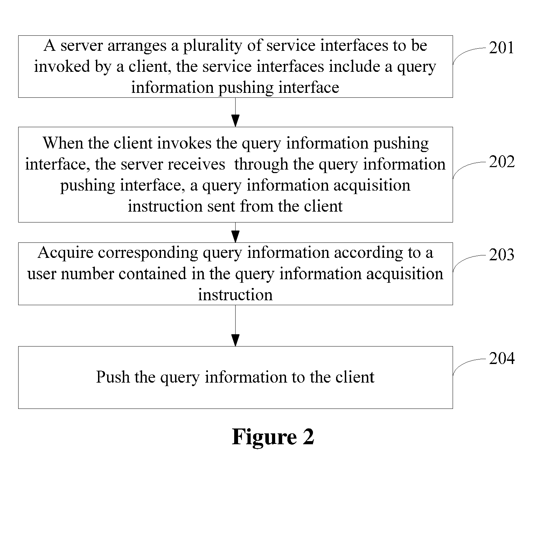

Referring Figure 2, which is a flow chart of a second embodiment of a user information pushing method according to the present invention, a process that a sever pushes query information to a client when the client sends a query instruction to the server is shown in this embodiment.

Step 201, arranging, in the server, a plurality of service interfaces to be invoked by a client, in which the service interfaces include a query information pushing interface.

In the embodiment of the present invention, the query information pushing interface is adapted to communicate with the server when a user needs to acquire account related information, so as to obtain the query information pushed by the server, therefore the user can view the query information through a presentation interface of a mobile terminal. Usually, the mobile terminal used by the user is installed with a client in order to implement communication between the mobile terminal and the server.

The query information pushing interface may includes: a user subscription changing message interface for querying information on change of user subscription such as home location of user, user status information, user credit information and so on; or a user bill message interface for acquiring bill information such as a charging list and details of the charging account.

Step 202, receiving, by the server, through the query information pushing interface, a query information acquisition instruction sent from the client, when the client invokes the query information pushing interface.

Step 203, acquiring corresponding query information according to a user number contained in the query information acquisition instruction.

Step 204, pushing the query information to the client, and ending the current process.

In the above embodiment, if the query information pushing interface is a user subscription changing message interface, the server receives through the user subscription changing message interface a user subscription changing information acquisition instruction sent from the client, acquires information on change of user subscription corresponding to a user number contained in the user subscription changing information acquisition instruction from a database in a memory through an information management platform according to the user number, and pushes the information on change of user subscription to the client through a network service interface.

If the query information pushing interface is a user bill message interface, the server receives a user bill information acquisition instruction through the user bill message interface, acquires bill information corresponding to a user number contained in the user bill information acquisition instruction through a cloud computing platform for bill processing of a bill center according to the user number, and pushes the bill information to the client through a SOCKET interface.

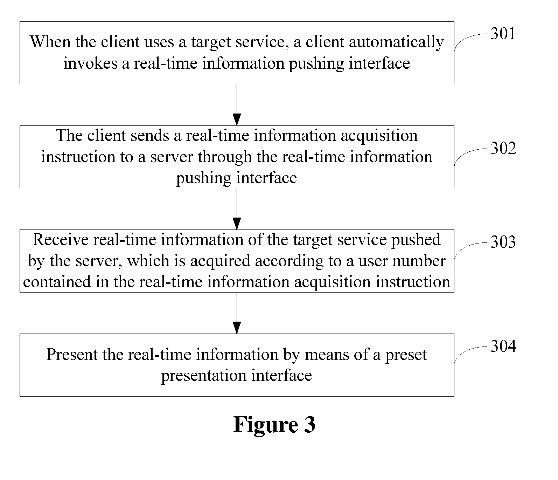

Referring to Figure 3, which is a flow chart of a first embodiment of a user information presentation method according to the present invention, a process that a client presents user service information pushed in real time when conducting a target service.

Step 301, automatically invoking, by the client, a real-time information pushing interface, when the client uses a target service.

Step 302, sending, by the client, a real-time information acquisition instruction to the server through the real-time information pushing interface.

Step 303, receiving real-time information of the target service pushed by the service, in which the real-time information of the target service is acquired according to a user number contained in the real-time information acquisition instruction.

Step 304, presenting the real-time information of the target service by means of a preset presentation interface, and ending the current process.

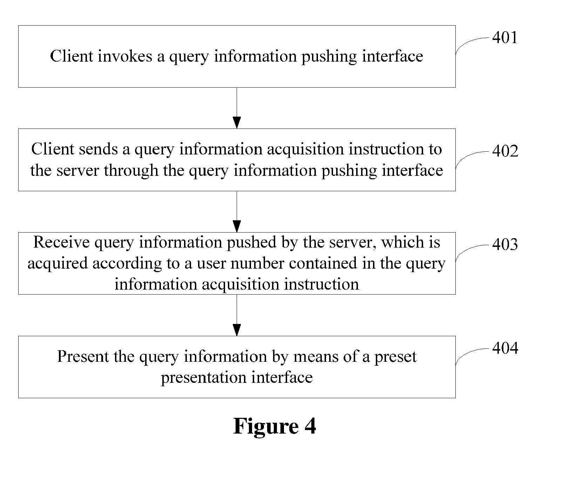

Referring to Figure 4, which is a flow chart of a first embodiment of a user information presentation method according to the present invention, a process that a client presents user service information pushed in real time when conducting a target service is shown.

Step 401, invoking, by the client, a query information pushing interface.

Step 402, sending, by the client, a query information acquisition instruction to the server through the query information pushing interface.

Step 403, receiving query information pushed by the server, in which the query information is acquired according to a user number contained in the query information acquisition instruction.

Step 403, presenting the query information by means of a preset presentation interface, and ending the current process.

In the above embodiment of the user information presentation method, the preset presentation interface may includes: a dashboard interface for presenting user service information of the target service, charging reservation information, information on change of user service balance; a list interface for presenting information on change of user subscription and bill information; and a chart interface for presenting analysis result of the historical consumption data for the user of the client.

Software for implementing the above functions of the client can be installed in the mobile terminal such as a mobile phone, a PDA or the like; alternatively, it can be installed in an experiencing table for charging of mobile service in a service hall; or it can also be installed in a monitor and management system platform at the operator side.

Taking the client installed in the phone used by a user as an example, the client is connected with an interface arranged in a server having a charging function, to perform communications in real time, so as to acquire user balance information including details such as total balance and gift of money; detailed account information within a period of time, including occurrence time of service, phone number of the opposite side, session type (such as calling, called, short message, multimedia message, GPRS or the like), duration/quantity, fees (such as charge for local calls, charge for long distance calls, and the like).

After turning on the interface of the mobile hone, if the user needs to acquire the information pushed by the server or needs to check user information, it is required for the user to firstly login in the client software installed in the mobile phone, login in the server by inputting a mobile phone number and a password, and then enters into a home page of the client application interface, on which a dashboard interface for displaying comparison information between the user charging balance and the limit for the selected service package pushed by the server is directly displayed, and related information for special offer pushed by the server can further be displayed.

Several selection buttons can be arranged on the home page of the client application interface, and each button corresponds to a corresponding presentation interface for pushed information. For example, a user information button can be arranged, and when the button is clicked, brand information, service package information, time for registering, usage status and like information pushed by the server is displayed on the interface of the mobile phone; a top ranking button can be arranged, and when the button is clicked, the top ranking of current new customized services, value-added data service information and the like pushed by the server is displayed on the interface of the mobile phone; a balance querying button can be arranged, and when the button is clicked, account balance information pushed by the server, including main fund account balance, gift cash account balance, free source account and the like is displayed on the interface of the mobile phone; a real-time details button can be arranged, when the button is clicked, bill details pushed by the server is displayed on the interface of the mobile phone, and if a period of time such as one month is selected, then displayed fields in the bill details may include: location of the call, start time, service domain, event name, number of the opposite side, fees and the like; a consumption history button can be arranged, and when the button is clicked, historical bill details for the last three months is displayed on the interface of the mobile phone, in which the displayed fields can include service scenes, calling number, called number, start time, end time, fees and so on; a voice button can be arranged, when the button is clicked, a dashboard for displaying the comparison information between user bill balance and the limit for the selected service package is displayed on the interface of the mobile phone, and during a voice call, a blinking voice icon can be displayed on the interface of the mobile phone in order to intuitively show the current service type; a short message button can be arranged, and when the button is clicked, a dashboard for displaying user balance as well as information about gift short messages is displayed on the interface of the mobile phone, and while sending a short message, a blinking short message icon can further be displayed on the interface of the mobile phone in order to intuitively show the current service type; a consumption analysis button can be arranged, and when the button is clicked, the server pushes the historical consumption data of the mobile phone, and the analysis result on the historical consumption data is displayed on the interface of the mobile phone, which can be displayed in the form of a pie graph, a sheet, or trend analysis chart; a strategy button can be arranged, and when the button is clicked, service package information and special offer information pushed by the server, which is recommend according to user consumption, is displayed on the interface of the mobile phone, so as to provide reference to the user.

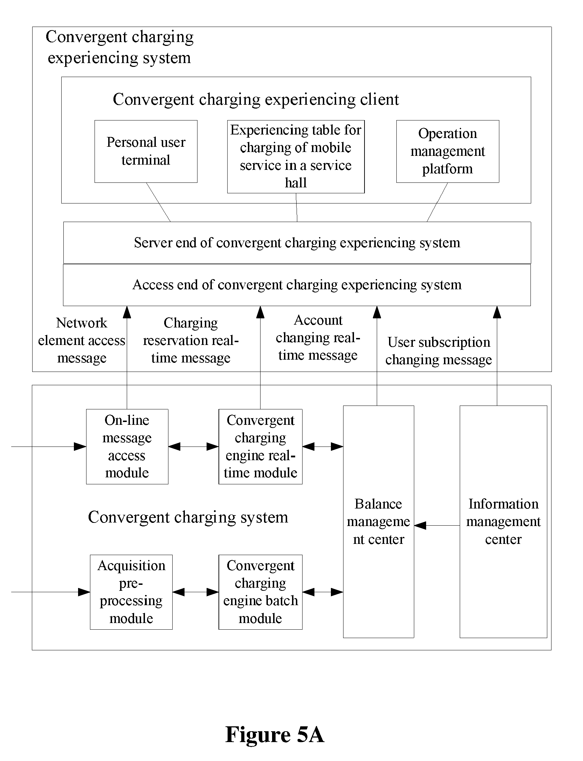

Referring to Figure 5A, which is a schematic diagram of a convergent charging architecture in which embodiments of the user information pushing method and the user information presentation method according to the present invention are utilized.

Figure 5A shows a convergent charging system and a convergent charging experiencing system in the convergent charging architecture. The convergent charging system includes an on-line message access module, a convergent charging engine implementing module, an acquiring pre-processing module, a convergent charging engine batch module, a balance management center and an information management center. Furthermore, a plurality of service interfaces are arranged in the convergent charging system, including: a network element real-time access message interface for acquiring in real time user service information including service status information, service charging information, charging network element information and session identification information, and for pushing the user service information from the on-line message access module to the access terminal of the convergent charging experiencing system by means of a network element real-time access message; a charging reservation real-time message interface, for acquiring charging reservation information in real time and for pushing the charging reservation information from the convergent charging engine real-time module to the access terminal of the convergent charging experiencing system by means of a charging reservation real-time message; an account changing real-time message interface, for acquiring information on change of user service balance in real time and for pushing the information on change of user service balance from the balance management center to the access terminal of the convergent charging experiencing system by means of an account changing real-time message; and a user subscription changing message interface, for querying information on change of user subscription and for pushing the information on change of user subscription from the information management center to the access terminal of the convergent charging experiencing system by means of a user subscription changing message.

In the convergent charging system of the embodiment of the present invention, the convergence of the on-line charging function and the off-line charging function is achieved, therefore centralized management and access for the balance account by a shared balance management center, uniform process to the charging logics by a shared batch engine, management of user data and configuration principles within the convergent charging system by the information management platform, and communication with a database for saving user data information are achieved.

Moreover, a convergent charging experiencing system is established based on the convergent charging system. The convergent charging experiencing system includes an accessing terminal of the convergent charging experiencing system, a server of the convergent charging experiencing system and a connected convergent charging experiencing client. The convergent charging experiencing client includes personal user terminals, experiencing tables in mobile service hall and an operation management platform. Therefore, visualized experience for the use of service is achieved. The convergent charging system can unify the service interfaces for the convergent charging experiencing systems by means of SOA (Service-Oriented Architecture).

Convergent charging system is an experience exhibiting platform, which integrates the on-line charging and the off-line charging, supports all-service, has a flexible configuration and good expansibility, and is applicable for convergent charging products of telecom operators and content providers. By installing a client software such as telecom charging table software in the mobile terminal of the user, quantized charging data such as balance and the residual message amount can be presented by means of a particular presentation interface such as a dashboard interface in the mobile terminal of the user, so that the user can conveniently query and monitor fee changing in real time; also, an experiencing table, which is an automatic terminal has similar function as the client software installed in the mobile terminal, can be installed in a mobile service hall, and the user can query and monitor the fee changing by the experiencing tables; similarly, the client software can be installed in the terminal used by the customer service staff of operators to monitor or query the charging information of a certain user.

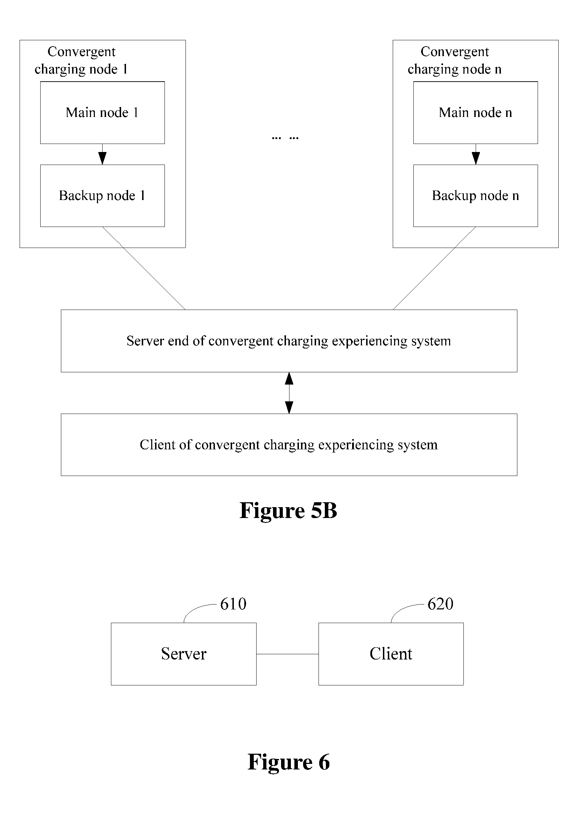

Referring to Figure 5B, which is a schematic structural diagram of the implementation of the convergent charging system in Figure 5A.

Since there is huge quantity of mobile terminal users, the convergent charging experiencing system is difficult to satisfy the pushing and querying requirements of mass data if only one server is available. Usually, several distributed servers may be arranged. N servers are shown in Figure 5B, each of which is adapted to push user information for numbers in a certain number range. Each server is a convergent charging node, and each convergent charging node includes a main node and a backup node, where information in the main node and information in the backup node are kept synchronized. The client of the convergent charging experiencing system obtains the pushed information through communication with the backup node. When more clients are added, the memory data in the backup node can also be copied in a cascade manner to provide same outgoing pushing services.

Corresponding to the embodiments of the user information pushing method and user information presentation method of the present invention, embodiments of a user information presentation system, server and client are also provided in the present invention.

Referring to Figure 6, which is an example block diagram of a user information presentation system according to the present invention, the user information presentation system includes: a server 610 and a client 620. In practical application, in one system, multiple cascaded servers operating concurrently, and several clients for presenting user information may co-exist. However, only one server and one client are shown in Figure 6 for purpose of convenience.

The server 610 is adapted to arrange a plurality of service interfaces to be invoked by the client 620, and the service interfaces include a real-time information pushing interface. When the client 620 uses a target service and automatically invokes the real-time information pushing interface, the server 610 receives through the real-time information pushing interface a real-time information acquisition instruction sent from the client 620, acquires real-time information of the target service according to a user number contained in the real-time information acquisition instruction, and pushes the real-time information to the client 620.

The client 620 is adapted to present the real-time information of the target service by means of a preset presentation interface.

Furthermore, the service interfaces arranged in the server 610 further include a query information pushing interface. When the client 620 invokes the query information pushing interface, the server 610 is further adapted to receive through the query information pushing interface a query information acquisition interface sent from the client 620, acquire corresponding query information according to the user number contained in the query information acquisition instruction, and push the query information to the client 620.

The client 620 is further adapted to present the query information by means of a preset presentation interface.

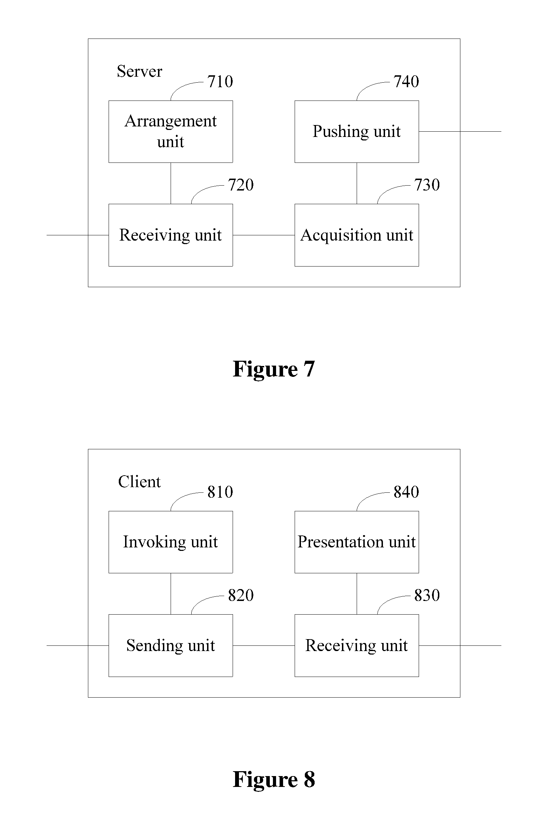

Referring to Figure 7, which is a block diagram of a server according to an embodiment of the present invention.

The server includes: an arrangement unit 710, a receiving unit 720, an acquisition unit 730 and a pushing unit 740.

The arrangement unit 710 is adapted to arrange a plurality of service interfaces to be invoked by a client, and the service interfaces include a real-time information pushing interface;

The receiving unit 720 is adapted to receive through the real-time information pushing interface a real-time information acquisition instruction sent from the client when the client uses a target service and automatically invokes the real-time information pushing interface.

The acquisition unit 730 is adapted to acquire real-time information of the target service according to a user number contained in the real-time information acquisition instruction; and

The pushing unit 740 is adapted to push the real-time information to the client.

Furthermore, the service interfaces arranged by the arrangement unit 710 further include a query information pushing interface; the receiving unit 720 is further adapted to receive through the query information pushing interface a query information acquisition instruction sent from the client, when the client invokes the query information pushing interface;

The acquisition unit 730 is further adapted to acquire corresponding query information according to the user number contained in the query information acquisition instruction.

The pushing unit 740 is further adapted to push the query information to the client.

Referring to Figure 8, which is a block diagram of a client according to an embodiment of the present invention.

The client includes: an invoking unit 810, a sending unit 820, a receiving unit 830 and a presentation unit 840.

The invoking unit 810 is adapted to use a target service and invoke a real-time information pushing interface.

The sending unit 820 is adapted to send a real-time information acquisition instruction to the server through the real-time information pushing interface.

The receiving unit 830 is adapted to receive real-time information of the target service pushed by server, which is acquired according to a user number contained in the real-time information acquisition instruction.

The presentation unit 840 is adapted to present the real-time information of the target service by means of a preset presentation interface.

Furthermore, the invoking unit 810 is further adapted to invoke a query information pushing interface.

The sending unit 820 is further adapted to send a query information acquisition instruction to the server through the query information pushing interface.

The receiving unit 830 is further adapted to receive query information pushed by the server, which is acquired according a user number contained in the query information acquisition instruction.

The presentation unit 840 is further adapted to present the query information by means of a preset presentation interface.

Specifically, the presentation unit 840 may include (not shown in Figure 8): a dashboard interface unit for presenting user service information, charging reservation information, information on change of user service balance of the target service by means of a dashboard interface; a list interface unit for presenting information on change of user subscription and bill information by means of a list interface; a chart interface unit for presenting the analysis result of historic consumption data of the user by means of a chart interface.

The client can be located in a mobile terminal, a mobile service charging experiencing table in a service hall or a monitor and management system platform.

From the above description of the embodiments, it may be seen that in the embodiments of the present invention, a plurality of service interfaces to be invoked by a client are arranged by the server; when a client uses a target service and automatically invokes a real-time pushing interface in the service interfaces, the server receives through the real-time information pushing interface a real-time information acquisition instruction sent from the client, acquires real-time information of the target service according to a user number contained in the real-time information acquisition instruction, and pushes the real-time information to the server; and the client presents the real-time information of the target service by means of a preset presentation interface. In the embodiments of the present invention, during the process of using a target service, by means of the client, user may obtain in real time the user information pushed by the server and present the user information by means of the preset presentation interface while using a target service. Compared with the prior art, the user does not need to conduct manual query operations after finishing the target service, therefore the implementation performance for the client to output user information and user experience are improved.

According to the description of the above embodiments, those skilled in the art can clearly understand that the present invention can be implemented by software in conjunction with a necessary general hardware platform. In view of this, the essential technical solutions or the part of the present invention that contributes to the prior art can be embodied in the form of a software product, which can be stored in a storage medium such as a ROM/RAM, a magnetic disk or a compact disk, and includes one or more instructions by which the methods described in the embodiments of the present invention or described in parts of the embodiments can be performed by a computer device (such as a personal computer, a server or a network device).

The embodiments of the invention are described in a progressive way ,each of which emphasizes the differences from others, and the same or similar elements among the embodiments can be referred to each other. Since the system disclosed in the embodiments corresponds to the method therein, the description thereof is relatively simple, and for relevant matters references may be made to the description of the method.

The present invention is applicable in many general or dedicated computer system environments or arrangements, such as a personal computer, a server computer, a handheld device or a portable device, a flat-type device, a multi-processor system, a microprocessor-based system, a set-top box, a programmable consumer electronic device, a network PC, a small scale computer, a larger scale computer, and a distributed computer environment including any of the above systems or devices.

The present invention can be described in a general context of executable instructions that are executed by a computer, such as a program module. Generally, the program module includes routine, program, object, component, data structure or the like for executing a particular task or implementing a particular abstract data type. In addition, the present invention can be practiced in a distributed computing environment in which the task is performed by a remote processing device connected via a communication network. In the distributed computing environment, the program module can be located in local or remote computer storage medium including a storage device.

Although the present application has been described with the embodiments, those skilled in the art may realize that there are many variations and modifications to the present application without departing the spirit of the present application. It is aimed that these variations and modifications fall in the scope of the attached claims without departing the spirit of the present application.

## Claims

1. A user information pushing method, **characterized in** arranging a plurality of service interfaces to be invoked by a client, wherein the service interfaces comprise a real-time information pushing interface, and the method comprises:
receiving, by a server, through the real-time information pushing interface, a real-time information acquisition instruction sent from the client, when the client uses a target service and automatically invokes the real-time information pushing interface;
acquiring real-time information of the target service according to a user number contained in the real-time information acquisition instruction; and
pushing the real-time information to the client.

2. The method according to claim 1, wherein the real-time information pushing interface is a network element real-time access message interface, and the method comprises:
receiving, by the server, through the network element real-time access message interface, a user service information acquisition instruction sent from the client;
capturing a service message for the target service from a shared memory according to the user number contained in the user service information acquisition instruction;
acquiring user service information from the service message, wherein the user service information comprises service status information, service charging information, charging network element information and session identification information; and
pushing the user service information to the client through a network service interface.

3. The method according to claim 2, wherein the real-time information pushing interface is a charging reservation real-time message interface, and the method comprises:
receiving, by the server, through the charging reservation real-time message interface, a user charging reservation information acquisition instruction sent from the client, wherein the user charging reservation information acquisition instruction comprises the session identification information;
acquiring charging reservation information of the target service from a database in a memory by a balance management center; and
pushing the charging reservation information to the client through a network service interface.

4. The method according to claim 1, wherein the real-time information pushing interface is an account changing real-time message interface, and the method comprises:
receiving, by the server, a user service balance changing information acquisition instruction through the account changing real-time message interface when the client ends the usage of the target service;
according to a user number contained in the user service balance changing information acquisition instruction, acquiring information on change of user service balance corresponding to the user number from a database in a memory through a balance management center, wherein the information on change of user service balance comprises service balance information before the using of the target service and service balance information after the using of the target service; and
pushing the information on change of user service balance to the client through a network service interface.

5. The method according to claim 1, wherein the service interfaces further comprise a query information pushing interface, and the method further comprises:
receiving, by the server, through the query information pushing interface, a query information acquisition instruction sent from the client, when the client invokes the query information pushing interface;
acquiring corresponding query information according to a user number contained in the query information acquisition instruction; and
pushing the query information to the client.

6. The method according to claim 5, wherein the query information pushing interface is a user subscription changing message interface, and the method comprises:
receiving, by the server, through the user subscription changing message interface, a user subscription changing information acquisition instruction sent from the client;
according to a user number contained in the user subscription changing information acquisition instruction, acquiring information on change of user subscription corresponding to the user number from a database in a memory through an information management platform; and
pushing the information on change of user subscription to the client through a network service interface.

7. The method according to claim 5, wherein the query information pushing interface is a user bill message interface, and the method comprises:
receiving, by the server, a user bill information acquisition instruction through the user bill message interface;
according to a user number contained in the user bill information acquisition instruction, acquiring bill information corresponding to the user number through a cloud computing platform for bill processing of a bill center; and
pushing the bill information to the client through a SOCKET interface.

8. A user information presentation method for presenting the information pushed by the user information pushing method according to any one of claims 1 to 7, comprising:
automatically invoking, by a client, a real-time information pushing interface, when the client uses a target service;
sending, by the client, a real-time information acquisition instruction to a server through the real-time information pushing interface;
receiving real-time information of the target service pushed by the server, wherein the real-time information of the target service is acquired according to a user number contained in the real-time information acquisition instruction; and
presenting the real-time information by means of a preset presentation interface.

9. The method according to claim 8, further comprising:
invoking, by the client, a query information pushing interface,
sending, by the client, a query information acquisition instruction to the server through the query information pushing interface;
receiving query information pushed by the server, wherein the query information is acquired according to a user number contained in the query information acquisition instruction; and
presenting the query information by means of the preset presentation interface.

10. The method according to claim 9, wherein the preset presentation interface comprises:
a dashboard interface, for presenting user service information of the target service, charging reservation information, information on change of user service balance;
a list interface, for presenting information on change of user subscription and bill information; and
a chart interface for presenting analysis result of historic consumption data of the user.

11. The method according to claim 8, wherein the client is located in a mobile terminal, an experiencing table for charging of mobile service in a service hall, or a monitor and management system platform.

12. A user information presentation system, comprising a server and a client, wherein:
the server is adapted to arrange a plurality of service interfaces to be invoked by a client, the service interfaces comprising a real-time information pushing interface, and when the client uses a target service and automatically invokes the real-time information pushing interface, the server receives through the real-time information pushing interface a real-time information acquisition instruction sent from the client, acquires real-time information of the target service according to a user number contained in the real-time information acquisition instruction, and pushes the real-time information to the client; and
the client is adapted to present the real-time information of the target service by means of a preset presentation interface.

13. The system according to claim 12, wherein the service interfaces further comprise a query information pushing interface,
the server is further adapted to receive through the query information pushing interface a query information acquisition instruction sent by the client when the client invokes the query information pushing interface, acquire corresponding query information according to a user number contained in the query information acquisition instruction, and push the query information to the client; and
the client is further adapted to present the query information by means of the preset presentation interface.

14. A server, comprising:
an arrangement unit, adapted to arrange a plurality of service interfaces to be invoked by a client, wherein the service interfaces comprise a real-time information pushing interface;
a receiving unit, adapted to receive through the real-time information pushing interface a real-time information acquisition instruction sent from the client, when the client uses a target service and automatically invokes the real-time information pushing interface;
an acquisition unit, adapted to acquire real-time information of the target service according to a user number contained in the real-time information acquisition instruction; and
a pushing unit, adapted to push the real-time information to the client.

15. The server according to claim 14, wherein the service interfaces further comprise a query information pushing interface,
the receiving unit is further adapted to receive through the query information pushing interface a query information acquisition instruction sent from the client when the client invokes the query information pushing interface;
the acquisition unit is further adapted to acquire corresponding query information according to a user number contained in the query information acquisition instruction; and
the pushing unit is further adapted to push the query information to the client.

16. A client device for presenting the information pushed by the server according claim 14 or 15, comprising:
an invoking unit, adapted automatically invoke a real-time information pushing interface when using a target service;
a sending unit, adapted to send a real-time information acquisition instruction to the server through the real-time information pushing interface;
a receiving unit, adapted to receive real-time information of the target service pushed by the server, wherein the real-time information of the target service is acquired according to a user number contained in the real-time information acquisition instruction; and
a presentation unit, adapted to present the real-time information of the target service by means of a preset presentation interface.

17. The client device according to claim 16, wherein:
the invoking unit is further adapted to invoke a query information pushing interface;
the sending unit is further adapted to send a query information acquisition instruction to the server through the query information pushing interface;
the receiving unit is further adapted to receive query information pushed by the server, wherein the query information is acquired according to a user number contained in the query information acquisition instruction; and
the presentation unit is further adapted to present the query information by means of the preset presentation interface.

18. The client device according to claim 17, wherein the presentation unit comprises:
a dashboard interface unit, adapted to present user service information of the target service, charging reservation information, information on change of user service balance, by a dashboard interface;
a list interface unit, adapted to present information on change of user subscription and bill information by a list interface; and
a chart interface unit, adapted to present analysis result of historic consumption data of the user by a chart interface.

19. The client device according to claim 16, wherein the client device is located in a mobile terminal, an experiencing table for charging of mobile service in a service hall, or a monitor and management system platform.
